# EUROPEAN PATENT APPLICATION

(11) **EP 4 438 331 A2**
(43) Date of publication of application: **02.10.2024**
(21) Application number: 24166678.3
(22) Date of filing: 27.03.2024
(51) Int. Cl.: B60C 7/14

(54) **NON-PNEUMATIC TIRE WITH Y-SHAPED SPOKE STRUCTURE**

(30) Priority: 29.03.2023 US 202363492801 P; 04.01.2024 US 202418404120
(71) Applicant: The Goodyear Tire & Rubber Company, Akron, OH 44316 (US)
(72) Inventor: SIGLER, Wesley Glen, Baberton 44203 (US); MILLER, Andrew James, Akron 44305 (US); MYERS, Ann Elizabeth, Cuyahoga Falls 44221 (US); RACHITA, Michael Joseph, North Canton 44720 (US)
(74) Representative: Kutsch, Bernd

(57) **Abstract**

A non-pneumatic tire (100) is disclosed comprising a spoke (102), the spoke comprising a first leg (202) extending from a shear band (103) to a hub (106) and a second leg (204) extending from the shearband (103) to the first leg (202). In one aspect, the non-pneumatic tire (100) comprises a plurality of spokes (102) positioned between a shear band (103) and a hub (106), wherein the plurality of spokes each have a Y-shaped architecture composed of a first side comprising a first leg (202) and a second leg (204) extending along the same plane in a radial direction of the non-pneumatic tire (100), and of a second side comprising a third leg (206) that is oriented at an angle to the second leg (204), and wherein a first spoke (102a) from the plurality of spokes (102) and a second spoke (102b) from the plurality of spokes (102) are orientated likewise along a circumferential direction of the non-pneumatic tire (100).

## Description

### FIELD OF THE DISCLOSURE

The present disclosure relates generally to tires, and more specifically to non-pneumatic tires or wheels.

### BACKGROUND OF THE DISCLOSURE

Pneumatic tires utilized air pressure to achieve a tensile structure that is capable of carrying loads associated with vehicular mobility. Pneumatic tires are capable of involving the entire tire structure in carrying the load to achieve low contact pressure and reduced wear on roads due to the load distribution. Additionally, pneumatic tires are known to exhibit low stiffness, which translates to a more comfortable ride within the vehicle. However, pneumatic tires are rendered ineffective upon decompression of the air. For example, a loss of inflation pressure can render pneumatic tires inoperable.

Non-pneumatic tires are designed to negate the necessity of air pressure by utilizing elastomeric structural supports to carry the load of the vehicle. Non-pneumatic tires are traditionally defined by their load carrying mechanism and are often classified as "bottom loaders" or "top loaders". Bottom loaders are essentially rigid structures that carry a majority of the load in the lower portion of the wheel, below the hub, where the tire contacts the ground. For example, bottom loaders carry the load from the hub to the contact patch. However, bottom loaders exhibit high contact pressure, which can result in poor traction and/or an undesirable tire footprint with the ground. In contrast, top loaders are designed to involve more of the tire structure, such that the force is distributed radially around the tire. While top loader non-pneumatic tires have attempted to reduce bottom loading, said tires have been unable to achieve an equivalent load distribution and level of performance as conventional pneumatic tires.

### SUMMARY OF THE DISCLOSURE

The invention relates to a non-pneumatic tire in accordance with claim 1, 8 or 11.

Dependent claims refer to preferred embodiments of the invention.

According to a preferred embodiment consistent with the present disclosure, a non-pneumatic tire is provided. The non-pneumatic tire comprises a spoke extending between a shear band and a hub. The spoke comprises a first leg and a second leg extending from the shear band to an intersection point. The spoke further comprises a third leg extending from the hub to the intersection point. The first leg and the third leg are oriented along the same direction, which is oriented at an angle to an orientation of the second leg. Further, the first leg, the second leg, and the third leg meet at the intersection point to form a Y-shaped architecture.

In another preferred embodiment, another non-pneumatic tire is provided. The non-pneumatic tire comprises a plurality of spokes positioned between a shear band and a hub. The plurality of spokes each have a Y-shaped architecture composed of a first side comprising a first leg and a second leg extending along the same plane in a radial direction of the non-pneumatic tire. The Y-shaped architecture can also be composed of a second side comprising a third leg that is oriented at an angle to the second leg. Additionally, a first spoke from the plurality of spokes and a second spoke from the plurality of spokes are orientated likewise along a circumferential direction of the non-pneumatic tire.

In a further preferred embodiment, another non-pneumatic tire is provided. The non-pneumatic tire comprises a first set of spokes extending between a shear band and a hub. The spokes of the first set have three legs positioned in a Y-shaped architecture. The non-pneumatic tire can also comprise a second set of spokes extending between the shear band and the hub. The spokes of the second set also have three legs positioned in the Y-shaped architecture. Also, the second set of spokes is positioned adjacent to the first set of spokes along an axial direction that is perpendicular to a radial direction of the non-pneumatic tire.

Any combinations of the various embodiments and implementations disclosed herein can be used in a further embodiment, consistent with the disclosure. These and other aspects and features can be appreciated from the following description of certain embodiments presented herein in accordance with the disclosure and the accompanying drawings and claims.

### DEFINITIONS

"Axial" and "axially" mean lines or directions that are parallel to the axis of rotation of the tire.

"Circumferential" means lines or directions extending perpendicular to the axial direction.

"Inner" or "inwardly" means toward the inside of the tire.

"Outer" or "outwardly" means toward the outside of the tire.

"Non-pneumatic tire" refers to a tire that is not needed to be supported by air pressure to support the weight.

"Radial" and "radially" are used to mean directions radially toward or away from the axis of rotation of the tire.

"Tread" means a molded rubber component, which includes that portion of the tire that comes into contact with the road when the tire is normally inflated and under normal load. The tread has a depth conventionally measured from the tread outer surface to the bottom of the deepest groove of the tire.

### BRIEF DESCRIPTION OF THE DRAWINGS

The invention will be described by way of example and with reference to the accompanying drawings in which:
FIG. 1 illustrates a side perspective of a non-limiting example pneumatic tire comprising a plurality of Y-shaped spokes in accordance with one or more embodiments described herein.
FIGS. 2A-B illustrate side perspectives of non-limiting example Y-shaped elastomer spoke for non-pneumatic top loading tires in accordance with one or more embodiments described herein.
FIGS. 3A-B illustrate side perspectives of non-limiting example Y-shaped elastomer spoke for non-pneumatic top loading tires in accordance with one or more embodiments described herein.
FIG. 4 illustrate an example Y-shaped elastomer spoke with reference orientations for integral reinforcement cords in accordance with one or more embodiments described herein.
FIGS. 5A-5F illustrate an example reinforcement cord orientations that can be utilized in one or more Y-shaped elastomer spokes for a non-pneumatic tire in accordance with one or more embodiments described herein.
FIGS. 6A-6B illustrate an example spoke layouts that can be utilized by one or more non-pneumatic tires in accordance with one or more embodiments described herein.
FIG. 7 illustrates a side perspective of an example non-pneumatic tire comprising a staggered multi-set spoke layout in accordance with one or more embodiments described herein.
FIG. 8 illustrates a side perspective of an example non-pneumatic tire comprising a flipped and staggered multi-set spoke layout in accordance with one or more embodiments described herein.
FIG. 9 illustrates a side perspective of an example non-pneumatic tire comprising an interlocking hub assembly in accordance with one or more embodiments described herein.
FIG. 10 illustrates an exploded view of an example mold for manufacturing Y-shaped spokes for non-pneumatic tires in accordance with one or more embodiments described herein.

### DETAILED DESCRIPTION OF PREFERRED EMBODIMENTS OF THE INVETION

Preferred embodiments of the present disclosure will now be described in detail with reference to the accompanying figures. Like elements in the various figures may be denoted by like reference numerals for consistency. Further, in the following detailed description of embodiments of the present disclosure, numerous specific details are set forth in order to provide a more thorough understanding of the claimed subject matter. However, it will be apparent to one of ordinary skill in the art that the embodiments disclosed herein may be practiced without these specific details. In other instances, well-known features have not been described in detail to avoid unnecessarily complicating the description. Additionally, it will be apparent to one of ordinary skill in the art that the scale of the elements presented in the accompanying Figures may vary without departing from the scope of the present disclosure.

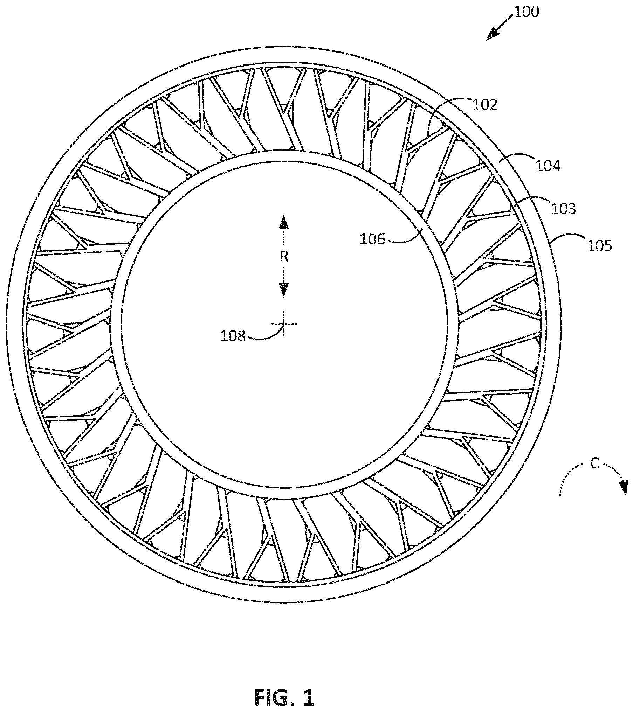

FIG. 1 depicts a side view of an example non-pneumatic tire 100 comprising a plurality of spokes 102 in accordance with various embodiments described herein. As shown in FIG. 1, the spokes 102 can be attached between a shear band 103 and hub 106 to form a portion of the tire 100. Further, a tread band 104 can be positioned on the shear band 103 define a radially outer tread surface 105. The tire 100 may be incorporated into a wheel for use in various vehicles including passenger vehicles, cars, trucks, trailers, off-road vehicles, all-terrain vehicles, buses, aircraft, bicycles, motorcycles, or agricultural equipment.

In various embodiments, the spokes 102 can be attached to a radially outward surface of the hub 106 and a radially inward surface of the shear band 103. Further, the tire 100 can revolve around a central axis 108 to enable a wheel incorporating the tire 100 to roll across the ground. The spokes 102 can be attached to the shear band 103 and/or the hub 106 via a variety of fixation means, such as: mechanical fasteners (e.g., screws, bolts, clamps, interconnecting slots), adhesives (e.g., cyanoacrylates, polyurethane adhesives), bonding materials, a combination thereof, and/or the like. For some examples, the spokes 102 can be attached to the shear band 103 by adhering the elastomeric materials together using, for example: green rubber and curing the rubber components together, or using a strip of green rubber between cured or partially cured rubber components. Likewise, the shear band 103 can be fixed to the tread band 104 via a mechanical fixation, adhesion, and/or bonding.

As the tire 100 rotates about the central axis 108, the radially outer tread surface 105 of the tread band 104 can interface with the ground. In some examples, the tread band 104 can be composed of an elastomeric material that can at least partially flatten upon contacting the ground (e.g., to form a planar footprint for the tire 100). Further, the tread band 104 can be a multi-layered structure comprising one or more reinforcement layers. In one or more embodiments, the spokes 102 can act as an elastomeric supporting element for the tread band 104. As portions of the radially outer tread surface 105 engage and disengage the ground, a nominal load exerted on the tire 100 can cause the tire 100 to flex and the adjacent spokes 102 to experience deflection. In one or more embodiments, the adjacent spokes 102 can be spaced from each other along the circumferential direction C such that the spokes 102 can deflect under load without contacting another spoke 102.

As shown in FIG. 1, the shear band 103 can have an annular structure extending along the circumferential direction C of the tire 100. In various embodiments, the shear band 103 can be composed of one or more rubber layers and/or elastomeric materials. In addition, the shear band 103 can include one or more reinforcement layers and/or reinforcement cords. The shear band 103 can function to transfer a load from the bottom of the tire 100 (e.g., where the tread band 104 is in contact with the ground) to the spokes 102 and hub 106. For example, the plurality of spokes 102 can extend from the hub 106 to the shear band 103 along a radial direction R of the tire 100. The spokes 102 can function to carry the load transmitted from the shear band 103, such that the spokes 102 are primarily loaded in tension and carry no load in compression. When the tire 100 is loaded, the spokes 102 can deform passing through the contact patch (e.g., a region where the tread band 104 interfaces with the ground) with substantially no compressive resistance, thereby supplying a negligible compressive force to the load bearing. Thus, the predominant load of the spokes 102 is carried through tension and/or shear, rather than compression. Thereby, the tire 100 is considered a top loader pneumatic tire 100. For instance, the Y-shape architecture embodied by the spokes 102 described herein can substantially mitigate an amount of bottom loading experienced by the tire 100. Further, the Y-shape architecture can exhibit greater bottom loading mitigation than spokes comprising a greater number of legs.

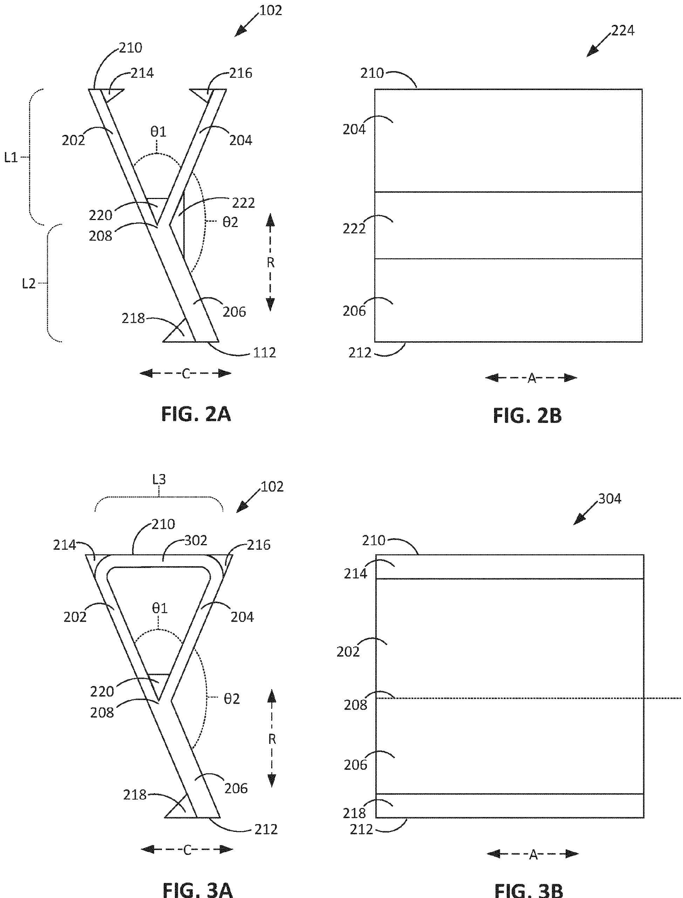

FIG. 2A depicts an exemplary embodiment of a spoke 102 of the present disclosure. In various embodiments, the spoke 102 can maintain a similar cross-section profile in the axial direction "A" of the spoke 102. As shown in FIG. 2A, the spoke 102 can include a first outer leg 202 and a second outer leg 204. Further, both the first outer leg 202 and the second outer leg 204 are integrally connected to an inner leg 206. Thereby, the spoke 102 can have a "Y-shape" defined by the first outer leg 202, the second outer leg 204, and the inner leg 206.

The first outer leg 202, the second outer leg 204, and the inner leg 206 can be composed of substantially the same material. For example, as described further herein, the first outer leg 202, the second outer leg 204, and the inner leg 206 can be have a multi-layer structure of rubber, thermoplastic elastomer materials, and/or polymer materials.

The first outer leg 202 and/or the second outer leg 204 can have a thickness ranging from, for example, greater than or equal to 1 millimeter (mm) and less than or equal to 4 mm. In some embodiments, the first outer leg 202 and/or the second outer leg 204 can have substantially the same thickness as each other. The inner leg 206 can have a thickness ranging from, for example, greater than or equal to 2 mm and less than or equal to 8 mm. In some embodiments, the inner leg 206 can have a thickness that is about twice as thick as the first outer leg 202 or the second outer leg 204.

As shown in FIG. 2A, the first outer leg 202 and the second outer leg 204 can be positioned at an angle to each other (e.g., along non-parallel orientations), such that the first outer leg 202 and the second outer leg 204 meet at an intersection point 208 with the inner leg 206. For example, the first outer leg 202 and the second outer leg 204 can form a "V-shape" configuration of the Y-shape. For instance, the first outer leg 202 and the second outer leg 204 can define a first angle "θ1", while the spoke 102 is not under load, ranging from, for example, greater than or equal to 20 degrees and less than or equal 90 degrees (e.g., 36 degrees). The inner leg 206 can extend from the intersection point 208 along the same, or substantially the same, orientation as the first outer leg 202 (e.g., as shown in FIG. 2A) or the second outer leg 204. For instance, in some embodiments the inner leg 206 can be substantially aligned with the first outer leg 202 such that a second angle "θ2" between the second outer leg 204 and the inner leg 206 is supplementary to the first angle "θ1". In one or more embodiments, the first outer leg 202 and the inner leg 206 can extend along the same plane in the radial direction R (e.g., as shown in FIGS. 2A and/or 3A).

In an example embodiment shown in FIG. 2A, the first outer leg 202 and the second outer leg 204 can both terminate to a radially outer surface 210. In various embodiments, the radially outer surface 210 can be a surface for attachment (e.g., can provide a means for attachment) to the shear band 103. Further, the inner leg 206 can terminate to a radially inner surface 212. In various embodiments, the radially inner surface 212 can be a surface for attachment (e.g., can provide a means for attachment) to the hub 106. In one or more embodiments, the radially outer surface 210 and/or the radially inner surface 212 can be slightly curved along the circumferential direction C to match the radius of curvature of the shear band 103 and/or hub 106 where the spoke 102 is attached. Alternatively, the radially outer surface 210 and/or the radially inner surface 212 can be flat, as shown.

Alternatively, FIG. 3A depicts another example embodiment of the spoke 102 in which the radially outer surface 210 includes the side surface of a bridge 302 that extends between the first outer leg 202 and the second outer leg 204. For example, the first outer leg 202 and the second outer leg 204 can extend from the intersection point 208 and terminate at the bridge 302. As shown in FIG. 3A, the bridge 302 can connect the first outer leg 202 and the second outer leg 204 over the intersection point 208. The bridge 302 can have a third length L3, extending along the circumferential direction C, that is a function of the lengths of the first outer leg 202, the second outer leg 204, and the first angle θ1.

Referring again to FIG. 2A, the first outer leg 202 and the second outer leg 204 can have a substantially equal first length L1 extending along the radial direction "R" (e.g., extending from the radially outer surface 210 to the intersection point 208). Additionally, in one or more embodiments, the inner leg 206 can have a second length L2, extending along the radial direction R, that is substantially equal to the first length L1. In some embodiments, the second length L2 can be shorter than the first length L1. In some embodiments, the first length L1 of the first outer leg 202 may slightly differ from the first length L1 of the second outer leg 204 to accommodate the change in radius as the spoke 102 extends between the shear band 103 and the hub 106. In one or more embodiments the first length L1 of the first outer leg 202 and/or the second outer leg 204 can be 50% or more of the total length of the spoke 102 (e.g., extending from the hub 106 to the shear band 103), and the second length L2 of the inner leg 206 can be less than 50% of the total length of the spoke 102.

In various embodiments, a first outer foot 214 can be positioned at a distal end of the first outer leg 202. Additionally a second outer foot 216 can be positioned at a distal end of the second outer leg 204. For instance, FIG. 2A depicts an example embodiment of the spoke 102 in which the first outer foot 214 is positioned on a side surface of the first outer leg 202 that faces the second outer leg 204. Likewise, the example embodiment depicted in FIG. 2A includes the second outer foot 216 positioned on a side surface of the second outer leg 204 that faces the first outer leg 202. Example materials that can compose the first outer foot 214 and/or the second outer foot include, but are not limited to, thermoplastic elastomer materials and/or polymer materials. In one or more embodiments, the first outer foot 214 and/or the second outer foot 216 can have a substantially triangular shape. Additionally, the first outer foot 214 and/or the second outer foot 216 can be composed of a relatively stiff rubber material having a modulus ranging from, for example, greater than or equal to 2 MegaPascal (MPa) and less than or equal to 30 MPa.

Alternatively, in the example embodiment depicted in FIG. 3A, the first outer foot 214 can be positioned adjacent to a connection between the bridge 302 and the first outer leg 202. Likewise, the second outer foot 216 can be positioned adjacent to a connection between the bridge 302 and the second outer leg 204. For instance, as shown in FIG. 3A, the bridge 302 can include bent portions that connect with the first outer leg 202 and the second outer leg 204, where the first outer foot 214 and the second outer foot 216 can be positioned adjacent to the bent portions of the bridge 302.

In either illustrated embodiment, the first outer foot 214 and the second outer foot 216 can further facilitate attachment of the first outer leg 202 and the second outer leg 204 to the shear band 103. For example, a surface area of the radially outer surface 210 of the spoke 102 can encompass a side of the first outer foot 214 and a side of the second outer foot 216. With the increase in surface area provided by the first outer foot 214 and the second outer foot 216 (e.g., in comparison to merely the distal ends of the first outer leg 202 and the second outer leg 204 or in comparison to merely a side surface of the bridge 302), an amount of fixation between the spoke 102 and the shear band 103 can also increase. For instance, the first outer foot 214 and/or the second outer foot 216 can widen the radially outer surface 210 along the circumference direction C to facilitate attachment of the spoke 102 to the shear band 103 via adhesives, mechanical fasteners, and/or bonding techniques.

Also, the spoke 102 can comprise a inner foot 218 positioned at a distal end of the inner leg 206. For instance, the inner foot 218 can be positioned at an end of the inner leg 206 nearest the radially inner surface 212. As shown in FIGS. 2A and 3A, the inner foot 218 can be positioned on a side surface of the inner leg 206, such that the inner foot 218 extends in a direction towards the intersection point 208 (e.g., the inner foot 218 can be positioned on a side of the inner leg 206 that is nearest the intersection point 208). In some embodiments, the inner foot 218 can be positioned on an opposite side surface of the inner leg 206, such that the inner foot 218 extends in a direction away from the intersection point 208 (not shown). Example materials that can compose the inner foot 218 can include, but are not limited to, thermoplastic elastomer materials and/or polymer materials. In one or more embodiments, the inner foot 218 can have a substantially triangular shape. Additionally, the inner foot 218 can be composed of a relatively stiff rubber material having a modulus ranging from, for example, greater than or equal to 2 MPa and less than or equal to 30 MPa. For instance, the inner foot 218 can have the same material composition, or substantially the same material composition, as the first outer foot 214 and/or the second outer foot 216.

The inner foot 218 can further facilitate attachment of the inner leg 206 to the hub 106, as described further herein. For example, a surface area of the radially inner surface 212 of the spoke 102 can encompass a side of the inner foot 218. With the increase in surface area provided by the inner foot 218 (e.g., in comparison to merely the distal end of the inner leg 206), an amount of fixation between the spoke 102 and the hub 106 can also increase. For instance, the inner foot 218 can widen the radially inner surface 212 along the circumference direction C to facilitate attachment of the spoke 102 to the hub 106 via adhesives, mechanical fasteners, and/or bonding techniques.

The spoke 102 can further include one or more joint portions 220. In various embodiments, the one or more joint portions 220 can be composed of a stiff rubber having a modulus ranging from, for example, greater than or equal to 2 MPa and less than or equal to 30 MPa. As shown in FIGS. 2A and 3A, the one or more joint portions 220 can positioned above the intersection point 208 between the first outer leg 202 and the second outer leg 204 along the circumferential direction C. Additionally, the one or more joint portions 220 can extend along the entire length, or near entire length, of the spoke 102 along the axial direction A. The one or more joint portions 220 can have substantially triangular shape that complements a void defined by the first outer leg 202 and the second outer leg 204. In one or more embodiments, the one or more joint portions 220 can have the same, or nearly the same, material composition as the first outer foot 214, the second outer foot 216, and/or the inner foot 218. As shown, the one or more joint portions 220 can thicken a portion of the spoke 102 along the circumferential direction C near the intersection point 208. Thereby, the one or more joint portions 220 can enhance structural integrity of the spoke 102 at the intersection point 208.

In the example embodiment shown in FIG. 2A, the spoke 102 can also comprise a dampener 222 positioned adjacent to the intersection point 208 and between the outer leg that is oriented at an angle with the inner leg 206. For instance, the dampener 222 can be positioned between the second outer leg 204 and the inner leg 206. The dampener 222 can be composed of a relatively soft rubber having a modulus ranging from, for example, greater than or equal to 2 MPa and less than or equal to 30 MPa (e.g., 4.8). Alternatively, as shown in FIG. 2A, embodiments of the spoke 102 that are absent the dampener 222 are also envisaged.

FIG. 2B illustrates a first side 224 of the spoke 102, as the spoke 102 extends in the axial direction A. The first side 224 of the spoke 102 can be, for example, a side where one of the radially outer legs is oriented at an angle to the inner leg 206. For instance, the first side 224 of the spoke 102 depicted in FIG. 2B includes the second outer leg 204 positioned at an angle (e.g., non-parallel) to the inner leg 206, as exemplified in FIG. 2A. FIG. 3B illustrates a second side 304 of the spoke 102, as the spoke 102 extends in the axial direction A. The second side 304 of the spoke 102 can be, for example, a side where one of the outer legs is oriented along the same trajectory as the inner leg 206. For instance, the second side 304 of the spoke 102 depicted in FIG. 3B includes the first outer leg 202 positioned in-line with the orientation of the inner leg 206.

In various embodiments, the spokes 102 can be formed of an elastic material such as rubber or a thermoplastic elastomer. For example, a suitable thermoplastic elastomer material can be characterized by the following properties. A tensile (Young's) modulus of the material is preferably greater than or equal to 45 MPa and less than or equal to 650 MPa (e.g., from 85 MPa to 300 MPa), using the ISO 527-1/-2 standard test method. The glass transition temperature of the material is preferably less than -25 degree Celsius (°C) (e.g., less than -35 °C). The elongation of the material at break is between 100 and 400% (e.g., more than 200%). The heat deflection temperature of the material is more than 40 °C, under 0.45 MPa (e.g., preferably more than 50 °C). Additionally, the material preferably exhibits no break result for the Izod and Charpy notched test at 23 °C using the ISO 179/SIO180 test method.

In various embodiments, the spokes 102 can be formed of rubber used in conventional tire construction. For example, the spokes 102 can be formed of a rubber with: polyester cord material, fiberglass reinforced resins, aramid, cotton, nylon, rayon, a combination thereof, and/or the like. The cord density or spacing of the cord material in each layer of the spokes 102 can be selected depending on the desired spoke 102 stiffness. In one example, layers made of nylon cord can have a density of 32 ends per inch (EPI). In another example, aramid layers could have a density of 16 EPI. For instance, the first outer leg 202, the second outer leg 204, and/or the inner leg 206 can have a single layer or multi-layer structure, where each layer is defined by a cord material orientation. In some embodiments, the first outer leg 202 and the second outer leg 204 can have n number of layers of reinforced rubber (e.g., comprising a cord material such as nylon or aramid) or thermoplastic material, and the inner leg 206 can have 2 times n (2n) number of layers.

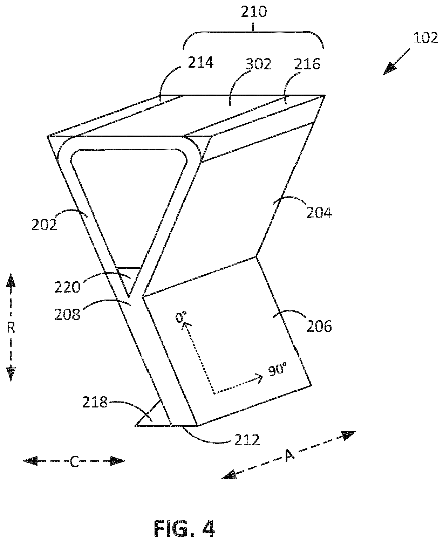

FIG. 4 depicts an example spoke 102 with 0° and 90° orientations to be referenced in describing various cord orientations that can be embodied by the one or more material layers of the first outer leg 202, the second outer leg 204, and/or the inner leg 206. As shown in FIG. 4 the 0° reference orientation can travel along a longitudinal axis of the first outer leg 202, the second outer leg 204, and/or the inner leg 206 (e.g., in substantially the radial direction R). Additionally, the 90° reference orientation can travel along the axial direction A of the spoke 102. While the example embodiment of the spoke 102 depicted in FIG. 3A is represented in FIG. 4, the single or multi-layer architecture described herein is also applicable to the example embodiment depicted in FIG. 2A.

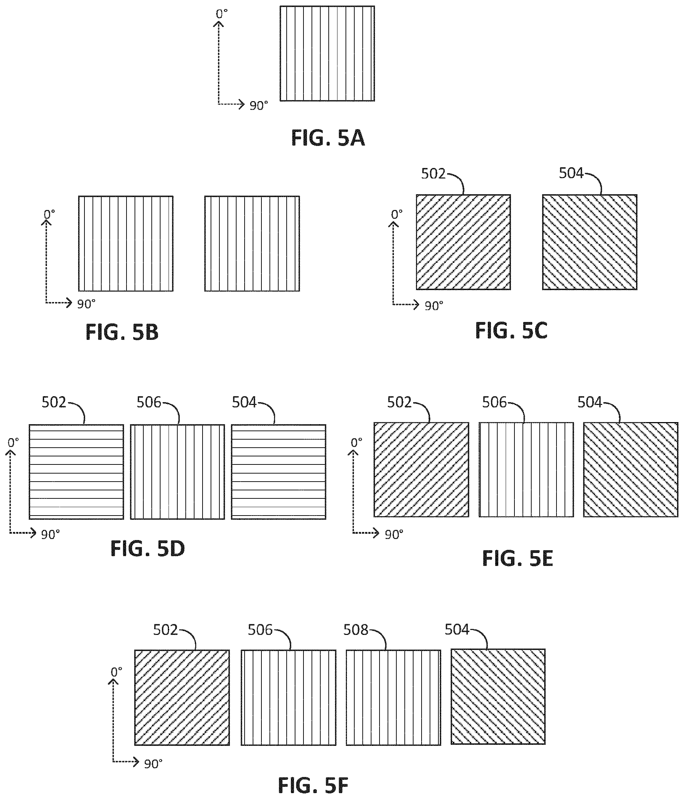

FIGS. 5A-5F depict example cord orientations that define respective layers of the first outer leg 202, the second outer leg 204, and/or the inner leg 206. For instance, 5A depicts an example embodiment in which the first outer leg 202, the second outer leg 204, and/or the inner leg 206 can have a single layer structure comprising cords oriented along the 0° reference orientation. FIG. 5B depicts an example embodiment in which the first outer leg 202, the second outer leg 204, and/or the inner leg 206 can have a two-layer structure, where each layer comprises cords oriented along the 0° reference orientation. FIG. 5C depicts an example embodiment in which the first outer leg 202, the second outer leg 204, and/or the inner leg 206 can have a two-layer structure; where a first layer 502 comprises cords oriented along a +45° orientation, and a second layer 504 comprises cords oriented along a -45° orientation. FIG. 5D depicts an example embodiment in which the first outer leg 202, the second outer leg 204, and/or the inner leg 206 can have a three-layer structure; where the first layer 502 and the second layer 504 comprise cords oriented along the 90° reference orientation, and a third layer 506 comprises cords oriented along the 0° reference orientation. In some embodiments, the third layer 506 can be primarily responsible for the load carrying function of the tire 100, while the first layer 502 and/or the second layer 504 can be primarily responsible for protecting the third layer 506 from extraneous damage. FIG. 5E depicts an example embodiment in which the first outer leg 202, the second outer leg 204, and/or the inner leg 206 can have a three-layer structure; where the first layer 502 can be oriented along a +45° orientation, the second layer 504 can be oriented along a -45° orientation, and the third layer 506 can be oriented along the 0° reference orientation. FIG. 5F depicts an example embodiment in which the first outer leg 202, the second outer leg 204, and/or the inner leg 206 can have a four-layered structure; where the first layer 502 can be oriented along a +45° orientation, the second layer 504 can be oriented along a -45° orientation, and the third layer 506 and a fourth layer 508 can be oriented along the 0° reference orientation.

One of ordinary skill in the art will recognize that the cord orientations depicted in FIGS. 5A-5F are exemplary, and additional cord orientation are envisaged (e.g., orientations along +/-30° or +/-60°). Additionally, the cord orientations are approximate and may vary by, for example, up to 10°. In some embodiments, the cord material composition can be the same, or substantially the same, amongst each layer. In other embodiments, the cord material composition of one layer can differ from the cord material composition of another layer.

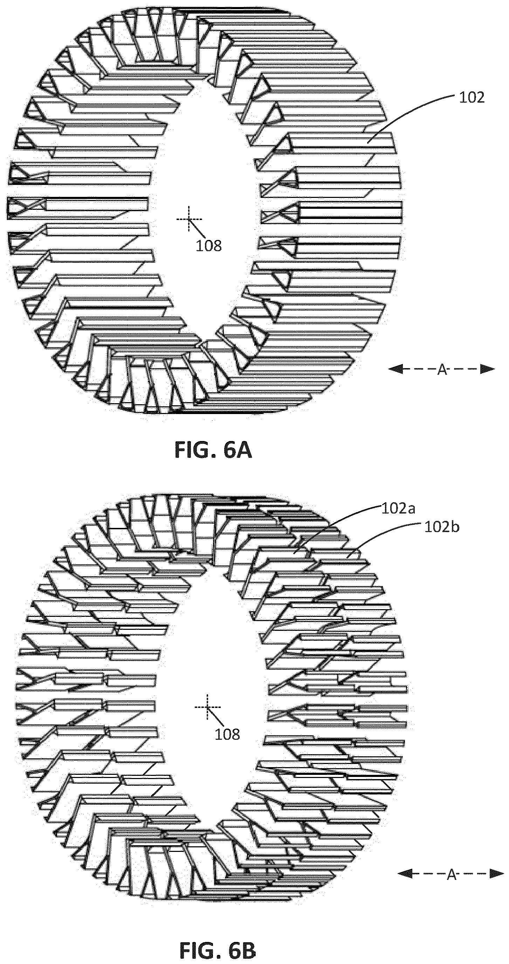

As exemplified in FIGS. 6A and 6B, the plurality of spokes 102 can be positioned as a single set along the circumferential direction C, or as multiple sets along the circumferential direction C. For instance, FIG. 6A depicts an example embodiment in which the plurality of spokes 102 are positioned as a single set, where the spokes 102 extend along the entire, or nearly entire, length of the tire 100 along the axial direction A. In another instance, FIG. 6B depicts an example embodiment in which the plurality of spokes 102 are positioned as two sets of spokes 102; where a first set of the spokes 102 extend along about half of the length of the tire 100 along the axial direction A, and the second set of spokes 102 extend along the remaining half of the length of the tire 100 along the axial direction A. In some embodiments, the number of sets of spokes 102 can range from, for example, greater than or equal to one and less than or equal to eight.

The number of spoke 102 sets can vary based on the application and/or dimensions of the tire 100. For example, as the length of the tire 100 increases along the axial direction A, the tire 100 can readily accommodate more sets of spokes 102. Likewise, the number of spokes 102 per set can also vary based on the application and/or dimensions of the tire 100. While FIGS. 6A and 6B depict thirty-six spokes 102 per set along the circumferential direction C, embodiments comprising fewer or more spokes 102 per set are also envisaged. For example, as the circumference of the tire 100 increases, the tire 100 can readily accommodate more spokes 102 per set. In some embodiments, the number of spokes 102 per set can range from, for example, greater than or equal to 30 and less than or equal to 60.

FIG. 6B depicts an example multi-set spoke layout in which a first spoke 102a of the first set is aligned with the adjacent second spoke 102b of the second set along the axial direction A. For example, form a side perspective, the example multi-set spoke layout depicted in FIG. 6B would appear as shown in FIG. 1, where the second spokes 102b of the second set would not be visible past the first spokes 102a of the first set. However, alternate multi-set spoke layouts are also envisaged.

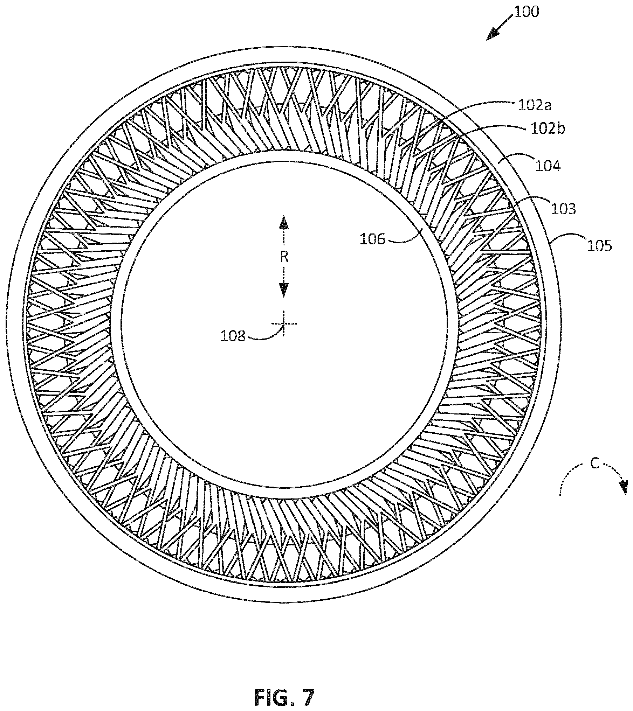

For example, whereas the spoke sets shown in FIG. 6B are aligned in the axial direction A, in one or more embodiments adjacent spoke sets can be staggered along the axial direction A. FIG. 7 depicts a side perspective of an example tire 100 comprising a plurality of spokes 102 positioned in a multi-set spoke layout comprising two sets of spokes 102 staggered in their respective positions along the axial direction A. Due the staggered positioning, one or more first spokes 102a from the first set and one or more second spokes 102b from the second set are both visible from the side of the tire 100. As shown in FIG. 7, the one or more first spokes 102a of the first set can be offset from the one or more second spokes 102b of the second set along the circumferential direction C. While FIG. 7 illustrates the example staggered multi-set spoke layout with regards to the example spoke 102 shown in FIG. 2A, the architecture can also be embodied by with the example spoke 102 shown in FIG. 3A.

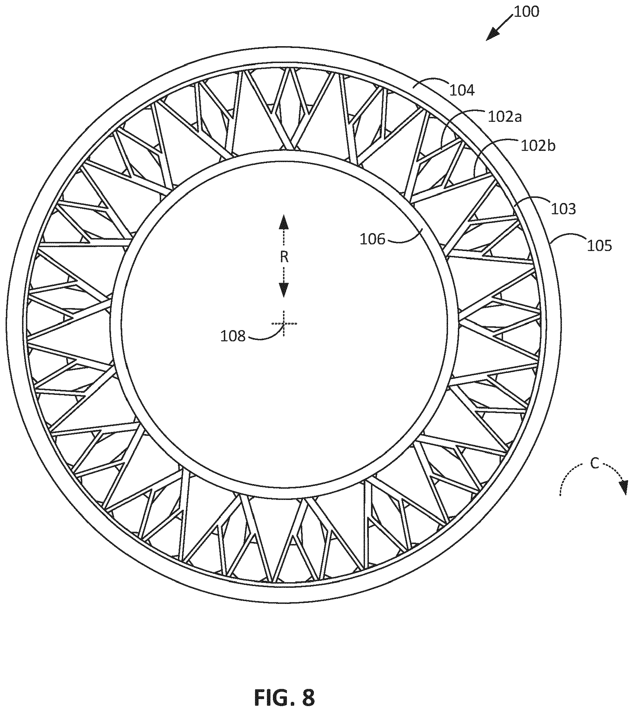

Additionally, while the example multi-set spoke layouts shown in FIGS. 6B and 7 comprise spokes 102 that are likewise oriented along the circumferential direction C. For instance, in FIG. 6B the spokes 102 are oriented such that a side of each spoke 102 comprising the dampener 222 is facing clock-wise. However, the spokes 102 can also be positioned in opposing orientations to each other, in an aligned or staggered position along the axial direction A. For example, FIG. 8 depicts a side perspective of an example tire 100 comprising a plurality of spokes 102 positioned in a multi-set spoke layout comprising two sets of spokes 102, where the spokes 102 of one set are reflections of the spokes 102 of another set about the radial direction R. For instance, as shown in FIG. 8, a first set can comprise one or more first spokes 102a and a second set can comprise one or more second spokes 102b having a flipped orientation in reference to the set of first spokes 102a. For instance, the set of first spokes 102a can have a first side 124 that faces clock-wise along the circumferential direction C; whereas the set of second spokes 102b can have the first side 124 face counter-clockwise along the circumferential direction C (e.g., as shown in FIG. 8). In some embodiments, spokes 102 having the flipped orientation can have portions aligned with adjacent spokes 102 and other portions staggered with adjacent spokes 102. For instance, as shown in FIG. 8, the outer legs of the non-flipped (e.g., first spokes 102a) and flipped (e.g. second spokes 102b) spokes 102 can be staggered along the circumferential direction C, while the inner legs 206 can be at least partially aligned in the circumferential direction C.

Due the flipped and staggered positioning, one or more first spokes 102a from the first set and one or more second spokes 102b from the second set are both visible from the side of the tire 100. As shown in FIG. 8, the one or more first spokes 102a of the first set can be offset from the one or more second spokes 102b of the second set along the circumferential direction C. While FIG. 8 illustrates the example flipped and staggered multi-set spoke layout with regards to the example spoke 102 shown in FIG. 2A, the architecture can also be embodied by with the example spoke 102 shown in FIG. 3A.

In accordance with various embodiments described herein, various multi-set spoke layout arrangements are envisaged as a function of one or more: non-flipped (e.g., along the radial direction R) aligned (e.g., along the axial direction A) spoke 102 sets, flipped aligned spoke 102 sets, non-flipped staggered spoke 102 sets, flipped staggered spoke 102 sets, and/or combinations thereof. Similarly, in accordance with various embodiments described herein, various single set spoke layout arrangements are envisaged as function of one or more non-flipped (e.g., along the radial direction R) aligned (e.g., along the axial direction A) spokes 102, flipped aligned spokes 102, non-flipped staggered spokes 102, flipped staggered spokes 102, and/or combinations thereof. In some embodiments, the spoke layout arrangement (e.g., the position, number, and/or orientation of spokes 102 between the hub 106 and shear band 103) can be designed and/or adjusted to tune a noise exhibited by the tire 100 during operation of the incorporated vehicle.

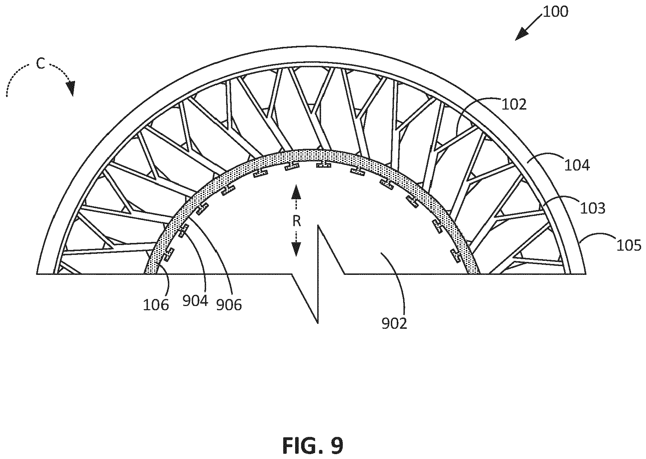

In various embodiments, the hub 106 can be attached to a wheel body 902, which can facilitate incorporation of the tire 100 onto an axil of a vehicle. In some embodiments, the hub 106 can be integrally formed with the wheel body 902 or fixed to the wheel body 902 via an adhesive and/or bonding material. In one or more embodiments, the hub 106 can also, or alternatively, be fixed to the wheel body 902 via a mechanical connection. For instance, FIG. 9 depicts an example embodiment of the tire 100 in which the hub 106 can comprise a plurality of projections 904 extending from an inner surface 906 of the hub 106. As shown in FIG. 9, the inner surface 906 can be opposite a surface of the hub 106 attached to the plurality of spokes 102. In particular, the inner surface 906 can face the central axis 108 of the tire 100. Further, the projections 904 can extend from the inner surface 906 into one or more channels within the wheel body 902. For example, the hub 106, and thereby the projections 904, can slide into the channels along the axial direction A of the tire 100. As shown in FIG. 9, the projections 904 can be shaped to inhibit movement of the hub 106 away from the wheel body 902 along the radial direction R.

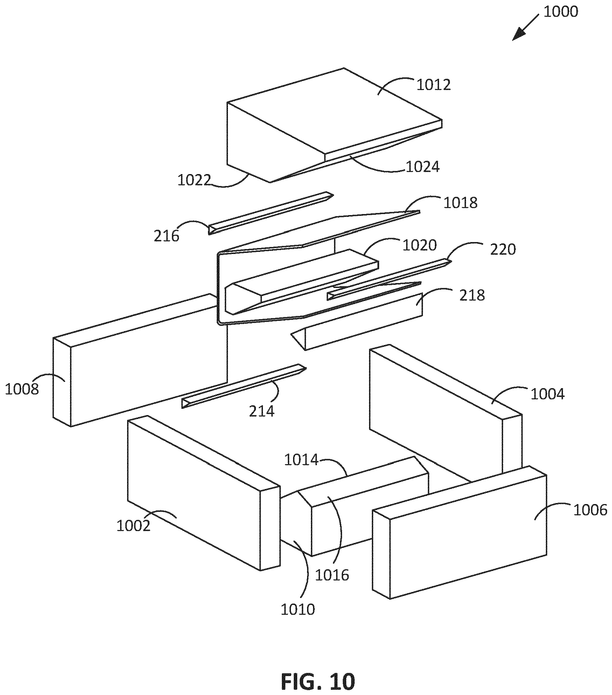

FIG. 10 illustrates an exploded view of a mold 1000 that can be used to manufacture a spoke 102 in accordance with one or more embodiments described herein. For example, FIG. 10 depicts the manufacturing of the spoke 102 exemplified in FIG. 3A. As shown in FIG. 10, the components of the spoke 102 are illustrated separately as they are placed into the mold 1000. The mold 1000 can comprise a front wall 1002, a back wall 1004, a first sidewall 1006, a second sidewall 1008, a bottom wall 1010, and a top wall 1012.

During the manufacturing process, the first outer foot 214 can be positioned on the bottom wall 1010 and adjacent to the second sidewall 1008. For instance, the first outer foot 214 can be positioned on a first sloped surface 1014 of the bottom wall 1010, which extends along a parallel orientation as the desired orientation for the first outer leg 202. Additionally, the inner foot 218 can be positioned on the bottom wall 1010 and adjacent the first sidewall 1006. For instance, the inner foot 218 can be positioned on a second sloped surface 1016 of the bottom wall 1010, which extends along a parallel orientation as the desired orientation for the inner foot 218.

Next, an elastomer material 1018 can be positioned on top of the first outer foot 214, the inner foot 218, and the first sloped surface 1014 of the bottom wall 1010. The elastomer material 1018 can form the first outer leg 202, the second outer leg 204, and/or the inner leg 206. For instance, the portion of the elastomer material 1018 in contact with the first outer foot 214, the inner foot 218, and the first sloped surface 1014 can form the first outer leg 202 and the inner leg 206.

Subsequently, a middle mold portion 1020 can be positioned on the elastomer material 1018 and over the first outer foot 214. As shown in FIG. 10, the elastomer material 1018 can travel up the second sidewall 1008 to wrap around the middle mold portion 1020; thereby a portion of the elastomer material 1018 can be positioned between the second sidewall 1008 and the middle mold portion 1020 to form the bridge 302. Additionally, the joint portion 220 can be positioned on the elastomer material 1018 adjacent to the middle mold portion 1020 and over the first sloped surface 1014. As described above and depicted in FIG. 10, the elastomer material 1018 can be wrapped around the middle mold portion 2020 so as to cover the joint portion 220 and further reside on top of itself over the first sloped surface 1014 and the inner foot 218.

Further, the second outer foot 216 can be positioned onto the elastomer material 1018 adjacent the second sidewall 1008 and over the middle mold portion 1020. Lastly, the top wall 1012 can be positioned onto the second outer foot 216 and the elastomer material 1018. As shown in FIG. 10, the top wall 1012 can have a first slanted surface 1022 that can extend in a parallel orientation as the desired orientation of the second outer leg 204. In addition, the top wall 1012 can have a second slanted surface 1024 that can extend in a parallel orientation as the desired orientation of the inner leg 206.

Once the uncured components of the spoke 102 are placed within the mold 1000, the front wall 1002, back wall 1004, first sidewall 1006, second sidewall 1008, bottom wall 1010, and top wall 1012 are closed and secured together. For instance, the respective walls can be tightened together to exert a pressure that presses the uncured components against each other and the middle mold portion 1020. Next, the mold 1000 can be heated to cure the elastomer components, thereby adhering the components together to form a composite spoke 102 structure. For instance, the mold 1000 can be heated to a temperature of at least 140 °C to cure the components of the spoke 102.

One of ordinary skill in the art will understand that the manufacturing and/or mold 1000 features exemplified in FIG. 10 can be slightly modified to reach the various embodiments described herein, including the example spoke 102 structure shown in FIG. 2A. For instance, a plurality of elastomer materials 1018 can be employed (e.g., as opposed to the single elastomer material 1018 approach shown in FIG. 10) to achieve a multi-layered structure and/or an architecture absent the bridge 302. Additionally, the order in which the components are placed in the mold 1000 can be varied to adjust the positioning of the first outer foot 214 and/or the second outer foot 216.

### Additional Embodiments

The present disclosure is also directed to the following exemplary embodiments, which can be practiced in any combination thereof.

Embodiment 1: A non-pneumatic tire, comprising: a spoke extending along a radial direction between a shear band and a hub, the spoke comprising a first leg and a second leg extending from the shear band to an intersection point, wherein the spoke further comprises a third leg extending from the hub to the intersection point, wherein the first leg and the third leg are oriented along the same direction, which is angled to an orientation of the second leg, and wherein the first leg, the second leg, and the third leg meet at the intersection point to form a Y-shaped architecture.

Embodiment 2: The non-pneumatic tire of embodiment 1, wherein the spoke further comprises a first foot cured to the first leg at a position adjacent to the shear band to provide surface area to an interface between the shear band and the spoke.

Embodiment 3: The non-pneumatic tire of embodiment 1 or 2, wherein the spoke further comprises a second foot cured to the second leg at a position adjacent to the shear band so as to provide further surface area to the interface between the shear band and the spoke.

Embodiment 4: The non-pneumatic tire of any of embodiments 1-3, wherein the spoke further comprises another foot cured to the third leg at a position adjacent to the hub to provide surface area to an interface between the hub and the spoke.

Embodiment 5: The non-pneumatic tire of any of embodiments 1-4, wherein the another foot is positioned at a side of the third leg that is nearest the intersection point.

Embodiment 6: The non-pneumatic tire of any of embodiments 1-5, wherein the spoke further comprises a dampener positioned above the intersection point and between the first leg and the second leg.

Embodiment 7: The non-pneumatic tire of any of embodiments 1-6, wherein the first leg and the second leg are composed of a first elastomer material and the dampener is composed of a second elastomer material having a different material composition than the first elastomer material.

Embodiment 8: The non-pneumatic tire of any of embodiments 1-7, wherein the spoke further comprises a bridge that extends from the first leg to the second leg along a circumferential direction of the non-pneumatic tire.

Embodiment 9: The non-pneumatic tire of any of embodiments 1-8, wherein the spoke is fixed to the shear band via an interface between a side surface of the bridge and an inner surface of the shear band, and wherein the inner surface of the shear band faces towards a central axis of the non-pneumatic tire.

Embodiment 10: The non-pneumatic tire of any of embodiments 1-9, wherein the spoke further comprises: a first foot positioned adjacent to a first portion of the bridge that meets the first leg, wherein the first foot is fixed to the shear band; a second foot positioned adjacent to a second portion of the bridge that meets the second leg, wherein the second foot is fixed to the shear band; and a third foot positioned adjacent to the third leg and the hub, wherein the third foot is fixed to the hub.

Embodiment 11: A non-pneumatic tire, comprising: a plurality of spokes positioned between a shear band and a hub, wherein the plurality of spokes each have a Y-shaped architecture composed of: a first side comprising a first leg and a second leg extending along the same plane in a radial direction of the non-pneumatic tire, and a second side comprising a third leg that is angled to the second leg, and wherein a first spoke from the plurality of spokes and a second spoke from the plurality of spokes are orientated likewise along a circumferential direction of the non-pneumatic tire.

Embodiment 12: The non-pneumatic tire of embodiment 11, wherein the second side of the first spoke and the second spoke face clockwise along the circumferential direction, and wherein the second side of a third spoke from the plurality of spokes faces counter-clockwise along the circumferential direction.

Embodiment 13: The non-pneumatic tire of embodiment 11, wherein the second side of the first spoke and the second spoke face counter-clockwise along the circumferential direction, and wherein the second side of a third spoke from the plurality of spokes faces clockwise along the circumferential direction.

Embodiment 14: The non-pneumatic tire of any of embodiments 11-13, wherein the non-pneumatic tire is a top loader non-pneumatic tire.

Embodiment 15: A non-pneumatic tire, comprising: a first set of spokes extending between a shear band and a hub, wherein the spokes of the first set have three legs positioned in a Y-shaped architecture; and a second set of spokes extending between the shear band and the hub, wherein the spokes of the second set also have three legs positioned in the Y-shaped architecture, wherein the second set of spokes is positioned adjacent to the first set of spokes along an axial direction that is perpendicular to a radial direction of the non-pneumatic tire.

Embodiment 16: The non-pneumatic tire of embodiment 15, wherein a first spoke from the first set of spokes is positioned adjacent to a second spoke from the second set of spokes along the axial direction.

Embodiment 17: The non-pneumatic tire of embodiment 15 or 16, wherein the first spoke is aligned with the second spoke along the axial direction.

Embodiment 18: The non-pneumatic tire of any of embodiments 15-17, wherein the first spoke is offset from the second spoke along the axial direction.

Embodiment 19: The non-pneumatic tire of any of embodiments 15-18, wherein a first side of the first spoke comprises two legs of the first spoke oriented at an angle to each other, and wherein a second side of the second spoke comprises two legs of the second spoke oriented at an angle to each other, wherein the first side of the first spoke faces clockwise along a circumferential direction of the non-pneumatic tire, and wherein the second side of the second spoke faces counter-clockwise along the circumferential direction of the non-pneumatic tire.

Embodiment 20: The non-pneumatic tire of any of embodiments 15-18, wherein a first side of the first spoke comprises two legs of the first spoke oriented at an angle to each other, and wherein a second side of the second spoke comprises two legs of the second spoke oriented at an angle to each other, wherein the first side of the first spoke face and the second side of the second spoke are likewise oriented along a circumferential direction of the non-pneumatic tire.

## Claims

1. A non-pneumatic tire comprising a spoke (102), the spoke comprising a first leg (202) extending from a shear band (103) to a hub (106) and a second leg (204) extending from the shearband (103) to the first leg (202).

2. The non-pneumatic tire of claim 1, wherein the spoke (102) further comprises a first foot (214) secured to the first leg (202) at a position adjacent to the shear band (103) to provide surface area to an interface between the shear band (103) and the spoke (102).

3. The non-pneumatic tire of claim 1 or 2, wherein the spoke (102) further comprises a second foot (216) secured to the second leg (204) at a position adjacent to the shear band (103) so as to provide further surface area to the interface between the shear band (103) and the spoke (102).

4. The non-pneumatic tire of at least one of the previous claims, wherein the spoke (102) further comprise a third leg (206) and a third foot (218) cured to the third leg (206) at a position adjacent to the hub (106) to provide surface area to an interface between the hub (106) and the spoke (102), the third foot (218) being preferably positioned at a side of the third leg (206) that is nearest to the hub (106) or to an intersection point.

5. The non-pneumatic tire of at least one of the previous claims, wherein the spoke (102) further comprises a dampener (222) positioned adjacent an intersection point (208) of the first leg (202) and the second leg (204) and, optionally, wherein the first leg (202) and the second leg (204) are composed of a first elastomer material and the dampener (222) is composed of a second elastomer material having a different material composition than the first elastomer material.

6. The non-pneumatic tire of at least one of the previous claims, wherein the spoke (102) further comprises a bridge (302) that extends from the first leg (202) to the second leg (204), and, optionally, wherein the spoke (102) is fixed to the shear band (103) via an interface between a side surface of the bridge (302) and an inner surface of the shear band (103).

7. The non-pneumatic tire of claim 6, wherein the spoke (102) further comprises:
a first foot (214) positioned adjacent to a first portion of the bridge (302) that meets the first leg (202), wherein the first foot (214) is fixed to the shear band (103);
a second foot (216) positioned adjacent to a second portion of the bridge (302) that meets the second leg (204), wherein the second foot (216) is fixed to the shear band (103); and
a third foot (218) positioned adjacent to the third leg (206) and the hub (106), wherein the third foot (218) is fixed to the hub (106).

8. A non-pneumatic tire, comprising:
a plurality of spokes (102) positioned between a shear band (103) and a hub (106), wherein the plurality of spokes each have a Y-shaped architecture composed of a first side comprising a first leg (202) and a second leg (204) extending along the same plane in a radial direction of the non-pneumatic tire (100), and of a second side comprising a third leg (206) that is oriented at an angle to the second leg (204);
wherein a first spoke (102a) from the plurality of spokes (102) and a second spoke (102b) from the plurality of spokes (102) are orientated likewise along a circumferential direction of the non-pneumatic tire (100).

9. The non-pneumatic tire of claim 8, wherein (i) the second side of the first spoke (102a) and the second spoke (102b) face clockwise along the circumferential direction, and wherein the second side of a third spoke from the plurality of spokes (102) faces counter-clockwise along the circumferential direction; or wherein (ii) the second side of the first spoke (102a) and the second spoke (102b) face counter-clockwise along the circumferential direction, and wherein the second side of a third spoke from the plurality of spokes (102) faces clockwise along the circumferential direction.

10. The non-pneumatic tire of at least one of the previous claims, wherein the non-pneumatic tire (100) is a top loader non-pneumatic tire.

11. A non-pneumatic tire, comprising:
a first set of spokes (102) extending between a shear band (103) and a hub (106), wherein the spokes (102) of the first set have three legs positioned in a Y-shaped architecture;
a second set of spokes (102) extending between the shear band (103) and the hub (106), wherein the spokes (102) of the second set also have three legs positioned in the Y-shaped architecture; and
wherein the second set of spokes (102) is positioned adjacent to the first set of spokes (102) along a axial direction that is perpendicular to a radial direction of the non-pneumatic tire (100).

12. The non-pneumatic tire of claim 11, wherein a first spoke (102a) from the first set of spokes (102) is positioned adjacent to a second spoke (102b) from the second set of spokes (102) along the axial direction.

13. The non-pneumatic tire of claim 11, wherein the first spoke (102a) is aligned with the second spoke (102b) along the axial direction.

14. The non-pneumatic tire of claim 11, wherein the first spoke (102a) is offset from the second spoke (102b) along the axial direction.

15. The non-pneumatic tire of claim 11, wherein a first side of the first spoke (102a) comprises two legs (202, 204) of the first spoke (102a) oriented at an angle to each other, and wherein a second side of the second spoke (102b) comprises two legs (202, 204) of the second spoke (102b) oriented at an angle to each other, and wherein (i) the first side of the first spoke (102a) faces clockwise along a circumferential direction of the non-pneumatic tire (100) and the second side of the second spoke (102b) faces counter-clockwise along the circumferential direction of the non-pneumatic tire (100), or wherein (ii) the first side of the first spoke (102a) face and the second side of the second spoke (102b) are likewise oriented along a circumferential direction of the non-pneumatic tire (100).
